# EUROPEAN PATENT SPECIFICATION

(11) **EP 4 173 910 B1**
(45) Date of publication and mention of the grant of the patent: **25.09.2024**
(21) Application number: 21205883.8
(22) Date of filing: 02.11.2021
(51) Int. Cl.: B60T 17/00, B01D 53/04, B01D 53/26

(54) **AIR TREATMENT DEVICE**
LUFTBEHANDLUNGSVORRICHTUNG
DISPOSITIF DE TRAITEMENT DE L'AIR

(43) Date of publication of application: 03.05.2023
(73) Proprietor: KNORR-BREMSE Systeme für Nutzfahrzeuge GmbH, 80809 München (DE)
(72) Inventor: TÓTH, Zoltán László, 6100 Kiskunfélegyháza (HU); OLÀH, Tibor, 6000 Kecskemét (HU); POLYAK, Tibor, 6044 Hetényegyháza (HU)

(56) References cited:
- EP-B1- 2 140 924

## Description

The present invention relates to an air treatment device for a vehicle, especially utility vehicle. In particular, the present invention relates to an air treatment device for a vehicle, especially utility vehicle, with a housing structure and an air treatment cartridge being connectable to each other in a customizable manner, e.g., for forming a unique connection associated to a particular application.

In the field of vehicles and especially utility vehicles, usually pneumatic systems are used for brakes, suspension and other auxiliary systems. The necessary compressed air is delivered by a compressor. An air supply system is typically equipped with an air treatment device such as an air dryer unit, which serves to decrease the water content of the air delivered by the compressor.

Typically, cartridges can be connected to the system, in particular to the air treatment device for air treatment, during an assembly process. For example, an air dryer cartridge such as a desiccant cartridge can be used.

In this regard, different types of cartridges can be used for different applications. One challenge is to make sure that the right type of cartridge is provided for the respective intended application. For example, normal or oil separator cartridges (OSC) as well as cartridges for different pressure levels etc. can be provided depending on said application. However, it is not secured that the right type of cartridge is assembled for the right application. Hence, if the wrong cartridge is assembled, technical issues (e.g., with respect to the pneumatic systems) can arise, e.g., due to an insufficient performance of the cartridge or due to an unsuitability of the cartridge's properties (e.g., not being fitted for the particular/intended application). Further, maintenance intervals might be missed and/or not complied with, which may also lead to further technical issues (e.g., with respect to the pneumatic systems). Accordingly, it is of utmost significance that the right cartridge is used for the right application.

In this respect, for example, EP 2 140 924 B1 discloses an air dryer cartridge comprising a coupling region being eccentrically disposed with respect to a longitudinal axis to which the cartridge is substantially axial symmetric, to thereby allow the cartridge to be combined with an air treatment device in a defined manner.

In view of the above, it is the problem of the invention to improve an air treatment device advantageously, in particular with respect to avoiding mis-assembly concerning different applications as well as to user-friendliness.

According to the invention, this problem is solved by an air treatment cartridge according to claim 1.

Correspondingly, an air treatment device for a vehicle, especially utility vehicle, comprises: a housing structure having a connecting neck portion, an air treatment cartridge being constructed to be substantially axially symmetric relative to a central axis (e.g., a central longitudinal axis) and being connected or connectable to the housing structure, wherein the air treatment cartridge has a coupling neck portion configured to connect or be connected to the connecting neck portion of the housing structure, wherein, when the air treatment cartridge is connected to the housing structure, the coupling neck portion and the connecting neck portion are arranged to be eccentric relative to the central axis.

The invention is based on the basic idea that an air treatment cartridge is provided with an eccentric element for connecting with a correspondingly disposed element of a housing structure, thereby allowing only such cartridges particularly designed for the housing structure to be connected to the housing structure and, hence, securing that the right cartridge is used for the intended application related to the particular combination/connection of the air treatment cartridge and the housing structure.

The housing structure further has a connecting edge portion, and
the air treatment cartridge further has a coupling edge portion configured to connect or be connected to the connecting edge portion of the housing structure via bayonet fixing means, wherein the connecting edge portion is provided with a threaded hole for receiving a securing screw of the bayonet fixing means, the threaded hole having a customized screw thread profile being different compared to a standardized screw thread profile, wherein, when the air treatment cartridge is connected to the housing structure, the connecting edge portion and the coupling edge portion can be secured (e.g., in the connected state) with the securing screw of the bayonet fixing means. In this respect, the housing structure is additionally equipped with a hole having a customized, e.g., unique, thread profile for receiving a securing screw of a bayonet fixing means, thereby allowing the customized thread profile to be associated to the particular combination/connection of the air treatment cartridge and the housing structure, i.e., to the intended application related therewith, and, hence, to avoid that an unsuitable cartridge is used in/with a particular, i.e., the intended, application.

The screw thread profile may have a different (e.g., reduced or smaller, or increased or larger) cross-sectional thread area in relation to a standardized screw thread profile. Accordingly, a screw connection can be established, e.g., with a corresponding securing screw for avoiding loosening of the cartridge, that is highly flexible and allows combining different thread profiles to be used, while at the same time allowing to provide selective thread profiles, which can only be used with a very specific corresponding thread profile. Herein, the cross-sectional area of a screw thread profile may be defined as an area, which is included in one unit of a thread and groove, which are repeated along the thread. When a screw thread profile is used, which has a reduced cross-sectional area, this means that the threading uses less material and can engage with a larger number of different threading profiles and types. In particular, such a thread profile is compatible with both the standardized screw thread profile, from which it is derived, and further screw thread profiles, which are using more material. In particular, the screw thread profile having a reduced cross-sectional thread area in relation to a standardized screw thread profile can be understood such that, compared to a standardized screw thread profile, the profile is reduced at least one position, but not enlarged compared to a standardized screw thread profile at any position. In particular, the screw thread profile can be defined such that it is a genuine subset of the standardized screw thread profile. In other words, the standardized screw thread profile can be used as an envelope curve, which comprises the screw thread profile. Accordingly, with respect to the above description, the contrary respectively applies to a screw thread profile being used, which has an increased or larger cross-sectional area. In this respect, the screw thread profile may not be suited for being connected with a standardized female thread. This aspect may also help in avoiding that an unsuitable cartridge is used in/with a particular, i.e., the intended, application.

The standardized screw thread may be of an ISO metric or buttress type. Also, other types of standardized thread profiles may be used as a starting point to configure the screw thread profile. For example, the standardized screw thread may be a thread complying with a standard or norm such as ISO 965, DIN 13 or DIN 513. Also, the standardized screw thread may be a thread complying with a standard or norm for threads for connecting air-dryer cartridges and pneumatic systems, in particular for utility vehicles.

The air treatment cartridge may further comprise one or more protrusions (e.g., pins) and/or one or more recesses (e.g., sockets) being arranged between the coupling neck portion and a (e.g., the) coupling edge portion of the air treatment cartridge, respectively, and the housing structure may further comprise one or more recesses (e.g., sockets) and/or one or more protrusions (e.g., pins) in a corresponding manner with respect to the one or more protrusions and/or the one or more recesses of the air treatment cartridge, respectively (i.e., each protrusion is associated with a corresponding recess, and vice versa), and being arranged between the connecting neck portion and a (e.g., the) connecting edge portion of the housing structure, respectively, wherein, when the air treatment cartridge is connected to the housing structure, the one or more protrusions and/or the one or more recesses of the air treatment cartridge and the housing structure may be engaged or engageable to each other in a respective corresponding manner (i.e., each protrusion is substantially accommodated in a corresponding recess). The protrusions and the recesses may additionally serve to ensure that the right cartridge is connected or connectable to the right housing structure and, hence, is used for the intended application. Each combination of a cartridge and a housing structure may be associated with a particular application and/or with a unique customer solution, wherein the number of protrusions and/or recesses and/or their position on the cartridge may allow for a customized connecting solution between the cartridge and the housing structure, thereby (additionally) ensuring that the right cartridge is used for the intended application. Further, the protrusions and the recesses may respectively act as guiding elements during an/the assembly process, thereby facilitating the assembly process as a whole as well as ensuring the correct position of the cartridge with respect to the housing structure.

The protrusions and/or the recesses of the air treatment cartridge and the housing structure may be equidistantly arranged with respect to the central axis. Hence, the equidistant arrangement may be defined by a (e.g., single) radius originating from the central axis. Due to such a design, the manufacturing may be simplified. However, it may also be possible that the protrusions and/or the recesses of the air treatment cartridge and the housing structure are arranged with individual distances with respect to the central axis. Hence, the protrusions and/or the recesses of the air treatment cartridge and the housing structure may be arranged at (respectively) different radial distances with respect to the central axis. In other words, a unique pattern of the protrusions and/or the recesses may be formed (by both the same and/or the individual distances), to thereby provide customizable connecting solutions for cartridges, which are only connectable to corresponding (i.e. correspondingly configured) housing structures. Hence, the cartridge can only be connected to a housing structure in an intended application.

The protrusions of the air treatment cartridge and/or the housing structure respectively comprise inclined outer guiding surfaces and the recesses of the air treatment cartridge and/or the housing structure respectively comprise inclined outer guiding surfaces being configured in a corresponding manner with respect to the respective associated protrusions. Hence, due to the inclination of the surfaces, an assembly aid may be provided, which facilitates the connection of the cartridge and the housing structure as well as provides a pre-centering during the assembly process. Additionally, it may also facilitate a correct alignment of the cartridge with respect to the housing structure.

The air treatment device may further comprise at least one first sealing element, especially elastic and isotropic sealing element, being arranged, when the air treatment cartridge is connected to the housing structure, between the connecting neck portion and the coupling neck portion, wherein, with regard to the central axis, at least one first axial sealing surface and at least one first radial sealing surface for contacting the sealing element in the connected state are formed by the connecting neck portion and/or the coupling neck portion. In particular, said sealing surfaces may be formed by the coupling neck portion, i.e., on the cartridge. Hence, an individual sealing solution may be provided which may be associated with a particular combination of the cartridge and the housing structure and, accordingly, with a particular application. Thereby, it may further be ensured that the right cartridge (i.e., the right type of cartridge) is assembled for the right application. Additionally, this setup enables an increased overall sealing contact area for the sealing element resulting first in an increased sealing performance. Second, the surface pressure of the sealing element may specifically be decreased due to the higher sealing contact area resulting in a lower material wear and strain together with a higher lifetime and a better pretension performance of the sealing element. In this regard, the sealing element may be formed by an elastomeric or rubber material and by an isotropic sealing material. Especially, the sealing element may be formed as a single sealing element.

The at least one first axial sealing surface and/or the at least one first radial sealing surface may comprise at least one first sealing groove. In particular, said sealing groove f may be formed in the coupling neck portion, i.e., on the cartridge. Said sealing groove may provide a compensation or reservoir volume for the first sealing element in order to compensate the changing distances of the sealing surfaces, which can differ during the normal and intentional operation of the air treatment device.

The first sealing element may be formed by at least one circular sealing ring (e.g., being formed as an O-ring). Circular sealing rings like O-rings are generally known as very reliable, cheap and efficient sealing solutions. Also, O-rings may provide very easy and fast mounting solutions. In this regard, O-rings, due to their isotropic and elastomeric material, may provide a structurally very simple solution of sealing the connecting neck portion and the coupling neck portion in an axial as well as a radial fashion. The isotropic and elastomeric material may be formed as rubber for example. It may also be conceivable that the sealing element alternatively or additionally is formed by at least one other shaped sealing ring (e.g., k-ring, delta-ring, v-ring, quad-ring, gamma-ring, wedge ring, sealing lens ring, flat sealing ring, molded sealing ring and/or lip sealing ring etc.).

The first sealing element, when the air treatment cartridge is connected to the housing structure, may be arranged such that the coupling neck portion together with its air treatment cartridge is pretensioned against the connecting neck portion together with its housing structure. In this configuration, the elastic sealing element may serve, beside its sealing function, like a rubber spring according to a pretension device for the housing structure and the cartridge. Accordingly, due to the pretention fitting between the coupling neck portion and the connecting neck portion, this effect may also be used to define a particular combination of the cartridge and the housing structure, which is associated to a particular application. Hence, the usage of an improper cartridge for a non-intended application may be prevented.

The housing structure may further have/comprise a (e.g., the) connecting edge portion, and the air treatment cartridge may further have/comprise a (e.g., the) coupling edge portion configured to connect or be connected to the connecting edge portion of the housing structure, and the air treatment device may further comprise at least one second sealing element, especially elastic and isotropic sealing element, being arranged, when the air treatment cartridge is connected to the housing structure, between the connecting edge portion and the coupling edge portion, wherein, with regard to the central axis, at least one second axial sealing surface and at least one second radial sealing surface for contacting the sealing element in the connected state are formed by the connecting edge portion and/or the coupling edge portion. In particular, said sealing surfaces may be formed by the coupling edge portion, i.e., on the cartridge. Hence, an individual sealing solution may be provided which may be associated with a particular combination of the cartridge and the housing structure and, accordingly, with a particular application. Thereby, it may further be ensured that the right cartridge (i.e., the right type of cartridge) is assembled for the right application. Additionally, this setup enables an increased overall sealing contact area for the sealing element resulting first in an increased sealing performance. Second, the surface pressure of the sealing element may specifically be decreased due to the higher sealing contact area resulting in a lower material wear and strain together with a higher lifetime and a better pretension performance of the sealing element. In this regard, the sealing element may be formed by an elastomeric or rubber material and by an isotropic sealing material. Especially, the sealing element may be formed as a single sealing element.

The at least one second axial sealing surface and/or the at least one second radial sealing surface may comprise at least one second sealing groove. In particular, said sealing groove may be formed in the coupling edge portion, i.e., on the cartridge. Said sealing groove may provide a compensation or reservoir volume for the second sealing element in order to compensate the changing distances of the sealing surfaces, which can differ during the normal and intentional operation of the air treatment device.

The second sealing element may be formed by at least one circular sealing ring (e.g., being formed as an O-ring). Circular sealing rings like O-rings are generally known as very reliable, cheap and efficient sealing solutions. Also, O-rings may provide very easy and fast mounting solutions. In this regard, O-rings, due to their isotropic and elastomeric material, may provide a structurally very simple solution of sealing the connecting neck portion and the coupling neck portion in an axial as well as a radial fashion. The isotropic and elastomeric material may be formed as rubber for example. It may also be conceivable that the sealing element alternatively or additionally is formed by at least one other shaped sealing ring (e.g., k-ring, delta-ring, v-ring, quad-ring, gamma-ring, wedge ring, sealing lens ring, flat sealing ring, molded sealing ring and/or lip sealing ring etc.).

The second sealing element, when the air treatment cartridge is connected to the housing structure, may be arranged such that the coupling edge portion together with its air treatment cartridge is pretensioned against the connecting edge portion together with its housing structure. In this configuration, the elastic sealing element may serve, beside its sealing function, like a rubber spring according to a pretension device for the housing structure and the cartridge. Accordingly, due to the pretention fitting between the coupling edge portion and the connecting edge portion, this effect may also be used to define a particular combination of the cartridge and the housing structure, which is associated to a particular application. Hence, the usage of an improper cartridge for a non-intended application may be prevented.

The threaded hole of the connecting edge portion may extend into an internal space being pressurized, when the air treatment device is operated, wherein, optionally, the threaded hole may be configured to form an airtight sealing together with the securing screw, when the connecting edge portion and the coupling edge portion are secured to each other by the securing screw of the bayonet fixing means. Accordingly, besides the aspect of the customization of the combination/connection of the cartridge and the housing structure for a particular application, when a corresponding securing screw is received in the threaded hole, the threaded hole may also allow a depressurization before disassembly of the cartridge from the housing structure.

These and other aspects of the present invention will now be described in more detail, with reference to the appended drawings showing exemplary embodiments of the invention, wherein:
- Fig. 1: schematically illustrates a view of an air treatment device according to an exemplary embodiment of the invention;
- Fig. 2: schematically illustrates a partial view of the air treatment device of Fig. 1 in a cross-sectional manner;
- Fig. 3A: schematically illustrates a partial view of a housing structure of the air treatment device of Fig. 1;
- Fig. 3B: schematically illustrates a partial view of an air treatment cartridge of the air treatment device of Fig. 1;
- Fig. 3C: schematically illustrates' a partial view of an air treatment cartridge of the air treatment device of Fig. 1;
- Fig. 4A: schematically illustrates a partial view of an air treatment device according to a further exemplary embodiment of the invention in a cross-sectional manner;
- Fig. 4B: schematically illustrates a partial view of an air treatment cartridge of the air treatment device of Fig. 4A;
- Fig. 5A: schematically illustrates a partial view of the air treatment device of Fig. 1;
- Fig. 5B: schematically illustrates a partial view of the air treatment device of Fig. 5A; and
- Fig. 6: schematically illustrates a partial view of an air treatment device according to a further exemplary embodiment of the invention in a cross-sectional manner.

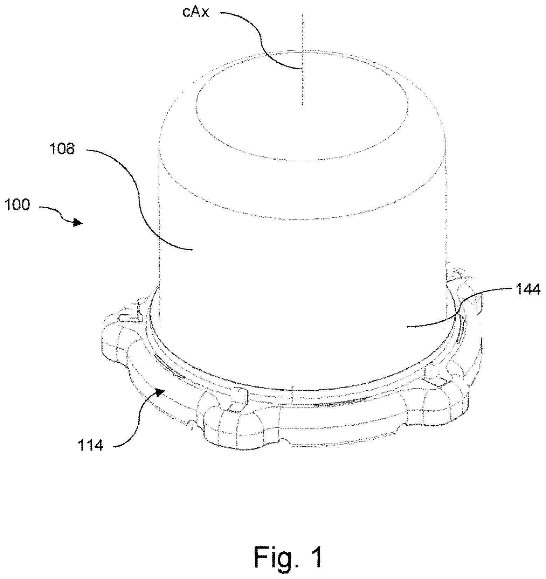

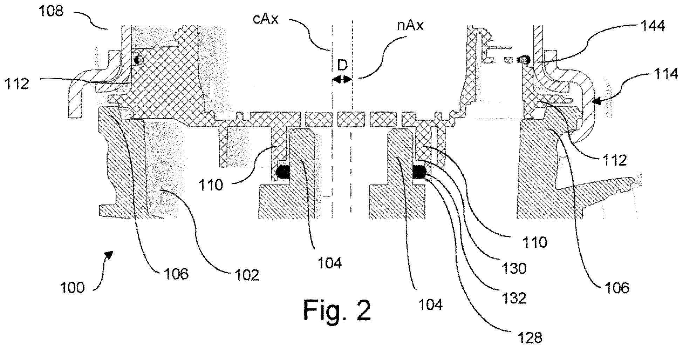

Turning to **Figs. 1** **and** **2****,** a schematic view of an air treatment device 100 according to an exemplary embodiment of the invention is illustrated, wherein only a respective part of the device 100 is respectively shown for reasons of clarity.

The air treatment device 100 for a vehicle, especially utility vehicle, comprises: a housing structure 102 having a connecting neck portion 104 and a connecting edge portion 106, and an air treatment cartridge 108 being constructed to be substantially axially symmetric relative to a central axis cAx and being connected or connectable to the housing structure 102.

The air treatment cartridge 108 has a coupling neck portion 110 configured to connect or be connected to the connecting neck portion 104 of the housing structure 102 and has a coupling edge portion 112 configured to connect or be connected to the connecting edge portion 106 of the housing structure 102 via bayonet fixing means 114.

As can be seen in Fig. 2, when the air treatment cartridge 108 is connected to the housing structure 102, the coupling neck portion 110 and the connecting neck portion 104 are arranged to be eccentric relative to the central axis cAx. The housing structure 102 is formed by an aluminum alloy.

The coupling neck portion 110 is substantially tubular and substantially extends along a neck axis nAx. Further, a fluid tract is formed through the coupling neck portion 110.

The connecting neck portion 104 is substantially tubular and substantially extends along another axis which coincides with the neck axis nAx of the coupling neck portion 110, when the air treatment cartridge 108 is connected to the housing structure 102. Further, a fluid tract is formed through the connecting neck portion 104.

As can be seen in Fig. 2, when the air treatment cartridge 108 is connected to the housing structure 102, the coupling neck portion 110 and the connecting neck portion 104 are arranged to be eccentrically spaced relative to the central axis cAx. In this regard, the central axis cAx and the neck axis nAx are substantially parallel to each other and are spaced to each other by a distance D. The distance D is the amount of the eccentricity.

Accordingly, due to the eccentricity (e.g., defined by distance D), it may be secured that only right type of cartridge 108 is connected to the correspondingly configured housing structure 102 and, hence, used for an intended, i.e., right, application.

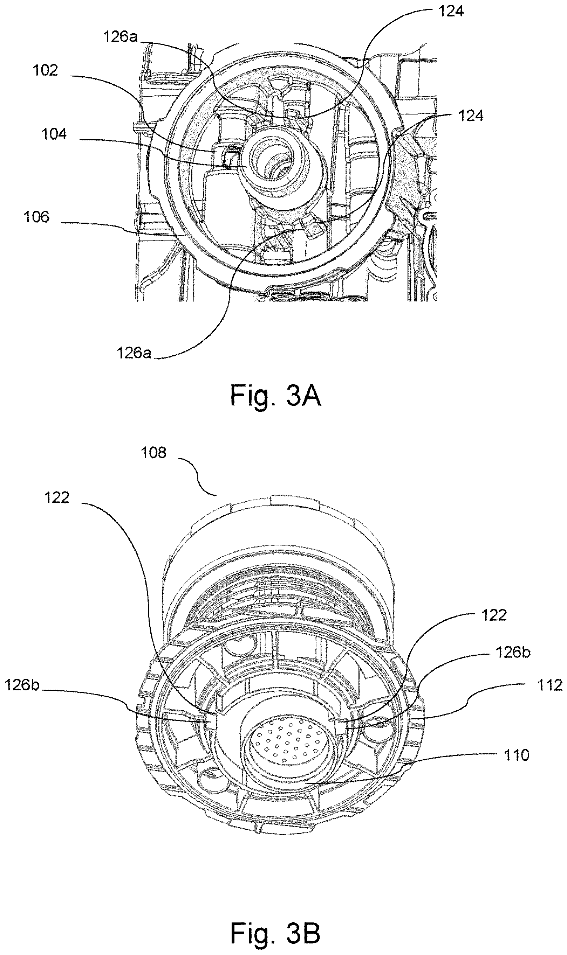

Now referring to **Figs. 3A to 3C****,** the air treatment cartridge 108 further comprises two recesses 122 for respectively receiving a corresponding counterpart, e.g., a protrusion or projection. However, the air treatment cartridge 108 may also comprise only one or more than two recesses 122. The recesses 122 are arranged between the coupling neck portion 110 and the coupling edge portion 112.

The housing structure 102 further comprises two protrusions 124 in a corresponding manner with respect to the recesses 122 of the air treatment cartridge 108, which are configured to enter said recesses 122, to thereby being engaged thereto. However, the housing structure 102 may alsoicomprise only one or more than two protrusions 124.The protrusions 124 are arranged between the connecting neck portion 104 and the connecting edge portion 106.

When the air treatment cartridge 108 is connected to the housing structure 102, the protrusions 124 of the housing structure 102 and the recesses 122 of the cartridge 108 are engaged to each other in a respective corresponding manner.

However, it should be understood, that the housing structure 102 may additionally or alternatively comprise one or more recesses and, correspondingly, the cartridge 108 may additionally or alternatively comprise one or more protrusions. Even further, it should be understood, that the housing structure 102 and the cartridge 108 may respectively comprise a mix of recesses and protrusions, wherein each recess is associated with a corresponding protrusion, and vice versa.

As can be further seen in Figs. 3A to 3C, the protrusions 124 and the recesses 122 of the housing structure 102 and the air treatment cartridge 108 are equidistantly arranged with respect to the central axis cAx. However, any distance may be applicable with respect to the central axis cAx, i.e., each protrusion 124 or each recess 122 may have an individual distance with respect to the central axis cAx (wherein each pair of corresponding protrusions and recesses are correspondingly arranged).

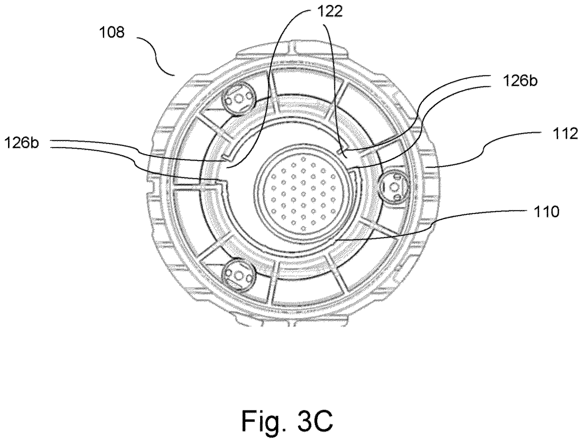

Further, as shown in Fig. 3C, the recesses 122 and, accordingly, the protrusions 124 (not shown in Fig. 3C) are spaced to each other by 60° with respect to the central axis cAx. However, any angular and/or radial distribution with respect to the central axis cAx may be conceivable. In other words, the recesses 122 and the protrusions 124 may be distributed in an evenly distributed pattern or in an unevenly distributed pattern, to thereby generate an individual or customized/customizable pattern (e.g., associated with a particular application of the cartridge 108) for ensuring that only the right cartridge can be mounted to the housing structure 102 for an intended application.

The protrusions 124 of the housing structure 102 respectively comprise inclined outer guiding surfaces 126a and the recesses 122 of the air treatment cartridge 108 respectively comprise inclined outer guiding surfaces 126b being configured in a corresponding manner with respect to the respective associated protrusions 124.

Accordingly, due to the recesses 122 and the protrusions 124, i.e., their arrangement on the cartridge 108 and on the housing structure 102, it is ensured that the right cartridge 108 is connected or connectable to the right housing structure 102 and, hence, is used for the intended application. Each combination of a cartridge 108 and a housing structure 102 may be associated with a particular application and/or with a unique customer solution, wherein the number of protrusions 124 and/or recesses 122 and/or their position on the cartridge may allow for a customized connecting solution between the cartridge 108 and the housing structure 102, thereby ensuring that the right cartridge 108 is used for the intended application.

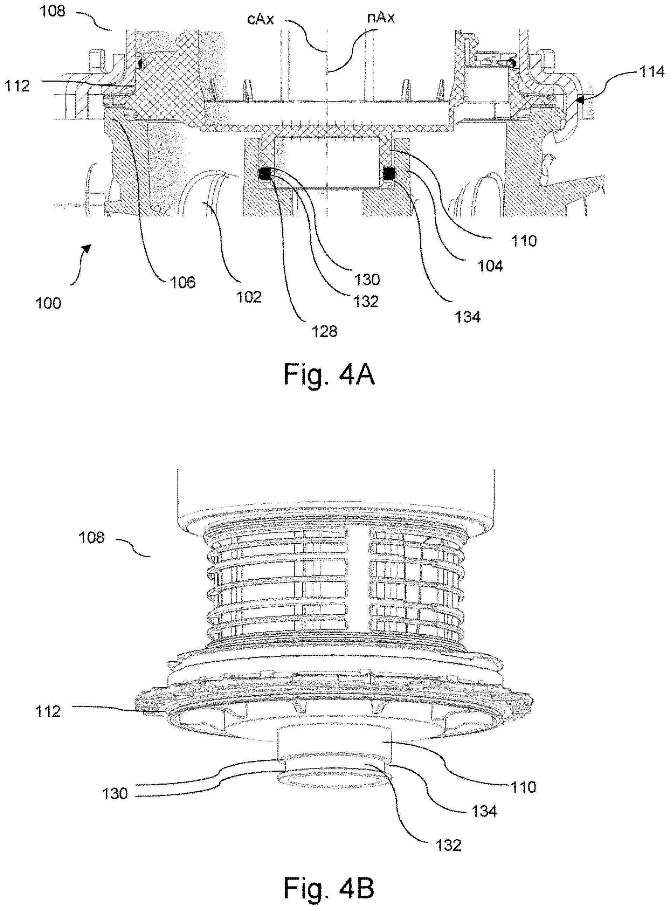

Referring to Fig. 2 in connection with Figs. 4A and 4B, the air treatment device 100 further comprises a first sealing element 128.

The first sealing element 128 is an elastic and isotropic sealing element and is arranged, when the air treatment cartridge 108 is connected to the housing structure 102, between the connecting neck portion 104 and the coupling neck portion 110.

With regard to the central axis cAx, at least one first axial sealing surface 130 and at least one first radial sealing surface 132 for contacting the sealing element 128 (in Fig. 2, the gap between the sealing element 128 and the axial sealing surface 130 is only for purposes of illustration and clarity) in the connected state are formed by the coupling neck portion 110.

Turning to **Figs. 4A and 4B** only, an air treatment device 100 according a further exemplary embodiment is schematically shown. This air treatment device 100 is substantially the same as described above, so that only the differences shall be described in the following. Both Figs. 4A and 4B are oriented in such a way that the central axis cAx and the neck axis nAx are aligned with each other in a radial direction.

The at least one first axial sealing surface 130 and the at least one first radial sealing surface 132 comprise a first sealing groove 134.

In other words, an upper and a lower first axial sealing surface 130 and a first radial sealing surface 132 form the first sealing groove 134.

The first sealing element 128 is formed by a circular sealing ring, i.e., in the present case, an O-ring (see Figs. 1 and 4A). The first sealing element 128 is accommodated in the first sealing groove 134 (shown in Fig. 4A, and not shown in Fig. 4B for clarity). Further, the first sealing element 128 is made of an elastic and isotropic material.

The first sealing element 128, when the air treatment cartridge 108 is connected to the housing structure 102, is arranged such that the coupling neck portion 110 together with its air treatment cartridge 108 is pretensioned against the connecting neck portion 104 I together with its housing structure 102.

In other words, the first sealing element 128 is arranged, in a mounted state, between the connecting neck portion 104 and the coupling neck portion 110, i.e., between the cartridge 108 and the housing structure 102, in a pretensioned manner.

Specifically, according to Figs. 1 and 4A, a first axial sealing surface 130 and a first radial sealing surface 132, with regard to the central axis cAx, both for contacting the first sealing element 128 are formed by the coupling neck portion 110.

Accordingly, a further radial sealing surface, with regard to the central axis cAx, for contacting the first sealing element 128 is formed opposite the first radial sealing surface 132 by the connecting neck portion 104.

The first sealing element 128 in the form of the O-ring is mounted in a pre-tensioned manner staying in the pre-tensioned contact with the first radial and axial sealing surfaces 132, 130 and with the further radial sealing surface.

As the sealing groove 134 is further provided (see description above), and due to the pretensioned state of the first sealing element 128 and its isotropic and elastomeric properties, the first sealing element 128 also extends into the sealing groove 134 according to a predetermined volume.

This is dependent on several pretension parameters (such as geometries, materials, surface roughness, rubber elasticity, and the pretension forces of the desiccant container and its first housing structure).

Accordingly, the first sealing element 128, in the mounted state, is arranged such that an (e.g., axial) movement of the cartridge 108 with regard to the housing structure 102 or vice versa may be compensated (due to the predetermined volume).

In other words, the first sealing groove 134 provides a compensation or reservoir volume for the first sealing element 128 in order to compensate the different distances of the sealing surfaces 130, 132, which differ during the normal and intentional operation of the air treatment device 100.

Accordingly, the above-described sealing solution may be (e.g., an additional) part/component of a customized connecting solution of the cartridge 108 and the housing structure 102 for securing that only the right type of cartridge is connected or connectable to the right housing structure 102 and, hence, used for the right application.

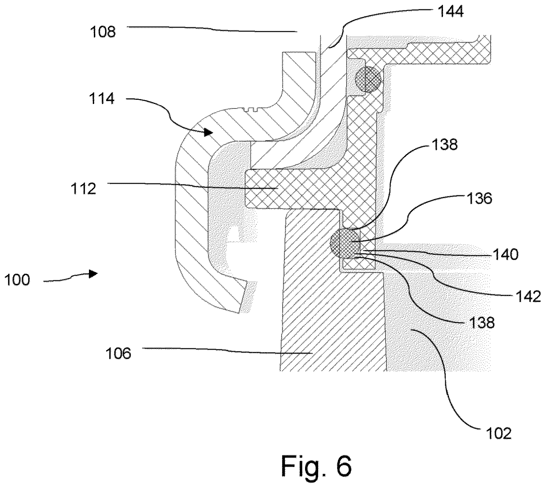

Now turning to **Fig. 6****,** which schematically illustrates a partial view of an air treatment device 100 according to a further exemplary embodiment of the invention in a cross-sectional manner, the air treatment device 100 according this embodiment further comprises a second sealing element 136, especially elastic and isotropic sealing element, being arranged, when the air treatment cartridge 108 is connected to the housing structure 102, between the connecting edge portion 106 and the coupling edge portion 112, wherein, with regard to the central axis cAx, at least one second axial sealing surface 138 and at least one second radial sealing surface 140 for contacting the sealing element 136 in the connected state are formed by the coupling edge portion 112.

The at least one second axial sealing surface 138 and the at least one second radial sealing surface 140 comprise a second sealing groove 142.

The second sealing element 136 is formed by a circular sealing ring, i.e., in the present case, an O-ring. The second sealing element 138 is accommodated in the second sealing groove 142. Further, the second sealing element 136 is made of an elastic and isotropic material.

The second sealing element 136, when the air treatment cartridge 108 is connected to the housing structure 102, is arranged such that the coupling edge portion 112 together with its air treatment cartridge 108 is pretensioned against the connecting edge portion 106 together with its housing structure 102.

Since the configuration of the second sealing element 136, the second axial sealing surface 138, the second radial sealing surface 140, and the second sealing groove 142 is substantially similar to the sealing components 128, 130, 132, 134 described in connection with Figs. 1, 4A and 4B, the description and advantages related to these components also apply for the second sealing components 136, 138, 140, 142 and a corresponding repetition of said properties and configurations can be avoided.

Accordingly, the above-described further sealing solution may be (e.g., an additional) part/component of a customized connecting solution of the cartridge 108 and the housing structure 102 for securing that only the right type of cartridge is connected or connectable to the right housing structure 102 and, hence, used for the right application.

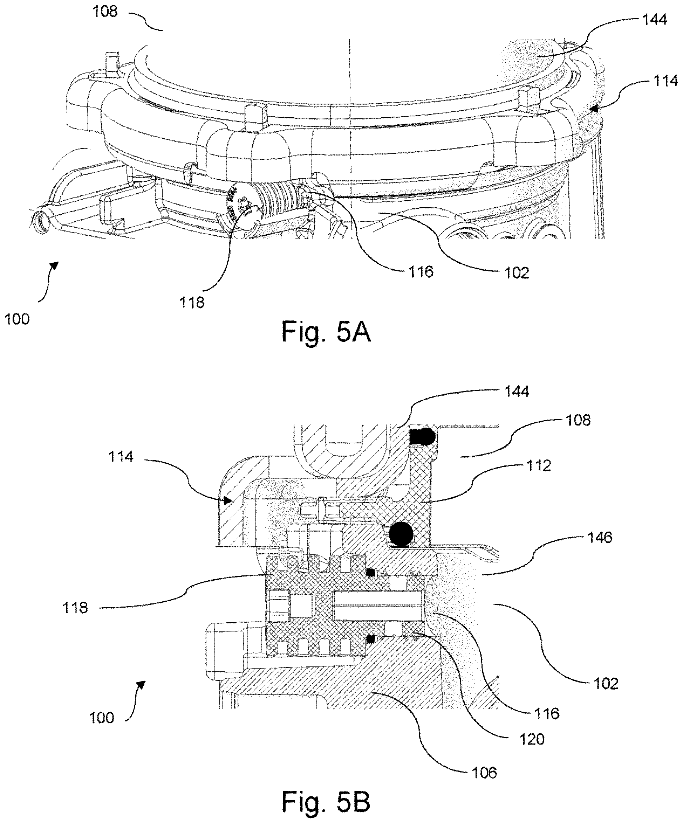

Turning to **Figs. 5A and 5B****,** the connecting edge portion 106 is provided with a threaded hole 116 for receiving a securing screw 118 of the bayonet fixing means 114, wherein the threaded hole 116 has a customized screw thread profile 120 being different compared to a standardized screw thread profile.

As can be seen in Figs. 5A and 5B in connection with Fig. 2, when the air treatment cartridge 108 is connected to the housing structure 102, the coupling neck portion 110 and the connecting neck portion 104 are arranged to be eccentric relative to the central axis cAx, and the connecting edge portion 106 and the coupling edge portion 112 can be secured with the securing screw 118 of the bayonet fixing means 114.

Accordingly, in other words, the cartridge 108 and the housing structure 102 are secured or securable to each other by the bayonet fixing means 114 and the securing screw 118.

In particular, the cartridge 108 and the housing structure 102 are secured or securable to each other by the bayonet fixing means 114 via a covering housing 144 of the cartridge 108.

The bayonet fixing means 114 is configured to be in a fixed position, when the securing screw 118 is engaged to the threaded hole 116, to thereby secure the cartridge 108 and the housing structure 102 to each other.

For example, in a secured state of the bayonet fixing means 114, the securing screw 118 blocks a rotation of a bayonet ring of the bayonet fixing means 114 in one direction of rotation (in particular, in the opening direction). Therefore, it is particularly advantageous if a nose of the bayonet fixing means 114 strikes the securing screw 118 in the secured state, to thereby block above-mentioned rotation.

Hence, in other words, the connecting edge portion 106 and the coupling edge portion 112 are secured to each other by the securing screw 118 of the bayonet fixing means 114 via the bayonet fixing means 114 and via the covering housing 144.

Hence, in still other words, the connecting edge portion 106 and the coupling edge portion 112 are secured to each other by the securing screw 118 of the bayonet fixing means 114.

The screw thread profile 120 has a different cross-sectional thread area in relation to a standardized screw thread profile. The standardized screw thread is of an ISO metric or buttress type.

In the present case, the screw thread profile 120 has a larger cross-sectional thread area in relation to the standardized screw thread profile, thereby being incompatible with a standardized screw thread profile. Hence, only a securing screw having a screw thread profile corresponding to the screw thread profile 120 of the threaded hole 116 can be used for securing the mounted state of the air treatment device 100.

Accordingly, due to the unique screw thread profile 120, it may be secured that the connection between the cartridge 108 and the housing structure 102 can only be realized for an/the intended application, e.g., which may be associated to the unique screw thread profile 120.

It may also be possible, that the screw thread profile 120 has a smaller cross-sectional thread area in relation to the standardized screw thread profile for above-described purpose.

The threaded hole 116 of the connecting edge portion 106 extends into an internal space 146 being pressurized, when the air treatment device 100 is operated, wherein, optionally, the threaded hole 116 is configured to form an airtight sealing together with the securing screw 118, when the connecting edge portion 106 and the coupling edge portion 112 are secured to each other by the securing screw 118 of the bayonet fixing means 114.

### REFERENCE SIGNS

- 100: air treatment device
- 102: housing structure
- 104: connecting neck portion
- 106: connecting edge portion
- 108: air treatment cartridge
- 110: coupling neck portion
- 112: coupling edge portion
- 114: bayonet fixing means
- 116: threaded hole
- 118: securing screw
- 120: screw thread profile
- 122: recess
- 124: protrusion
- 126a, 126b: inclined outer guiding surface
- 128: first sealing element
- 130: first axial sealing surface
- 132: first radial sealing surface
- 134: first sealing groove
- 136: second sealing element
- 138: second axial sealing surface
- 140: second radial sealing surface
- 142: second sealing groove
- 144: covering housing
- 146: internal space

## Claims

1. Air treatment device (100) for a vehicle, especially utility vehicle, the air treatment device (100) comprising:
a housing structure (102) having a connecting neck portion (104),
an air treatment cartridge (108) being constructed to be substantially axially symmetric relative to a central axis (cAx) and being connected or connectable to the housing structure (102),
wherein the air treatment cartridge (108) has a coupling neck portion (110) configured to connect or be connected to the connecting neck portion (104) of the housing structure (102),
wherein, when the air treatment cartridge (108) is connected to the housing structure (102), the coupling neck portion (110) and the connecting neck portion (104) are arranged to be eccentric relative to the central axis (cAx),
wherein the housing structure (102) further has a connecting edge portion (106), and the air treatment cartridge (108) further has a coupling edge portion (112) configured to connect or be connected to the connecting edge portion (106) of the housing structure (102) via bayonet fixing means (114),
**characterized in that**
the connecting edge portion (106) is provided with a threaded hole (116) for receiving a securing screw (118) of the bayonet fixing means (114), the threaded hole (116) having a customized screw thread profile (120) being different compared to a standardized screw thread profile,
wherein, when the air treatment cartridge (108) is connected to the housing structure (102), the connecting edge portion (106) and the coupling edge portion (112) can be secured with the securing screw (118) of the bayonet fixing means (114).

2. . The air treatment device (100) according to claim 1,
**characterized in that**
the screw thread profile (120) has a different cross-sectional thread area in relation to a standardized screw thread profile, wherein, optionally, the standardized screw thread is of an ISO metric or buttress type.

3. The air treatment device (100) according to one of the preceding claims,
**characterized in that**
the air treatment cartridge (108) further comprises one or more protrusions and/or one or more recesses (122) being arranged between the coupling neck portion (110) and a coupling edge portion (112) of the air treatment cartridge (108), respectively, and
the housing structure (102) further comprises one or more recesses and/or one or more protrusions (124) in a corresponding manner with respect to the one or more protrusions and/or the one or more recesses (122) of the air treatment cartridge (108), respectively, and being arranged between the connecting neck portion (104) and a connecting edge portion (106) of the housing structure (102), respectively,
wherein, when the air treatment cartridge (108) is connected to the housing structure (102), the one or more protrusions (124) and/or the one or more recesses (122) of the air treatment cartridge (108) and the housing structure (102) are engaged to each other in a respective corresponding manner.

4. The air treatment device (100) according to claim 3,
**characterized in that**
the protrusions (124) and/or the recesses (122) of the air treatment cartridge (108) and the housing structure (102) are arranged equidistantly or at different radial distances with respect to the central axis (cAx).

5. The air treatment device (100) according to claim 3 or 4,
**characterized in that**
the protrusions (124) of the air treatment cartridge (108) and/or the housing structure (102) respectively comprise inclined outer guiding surfaces (126a) and the recesses (122) of the air treatment cartridge (108) and/or the housing structure (102) respectively comprise inclined outer guiding surfaces (126b) being configured in a corresponding manner with respect to the respective associated protrusions (124).

6. The air treatment device (100) according to one of the preceding claims,
**characterized in that**
the air treatment device (100) further comprises at least one first sealing element (128), especially elastic and isotropic sealing element, being arranged, when the air treatment cartridge (108) is connected to the housing structure (102), between the connecting neck portion (104) and the coupling neck portion (110), wherein, with regard to the central axis (cAx), at least one first axial sealing surface (130) and at least one first radial sealing surface (132) for contacting the sealing element (128) in the connected state are formed by the connecting neck portion (104) and/or the coupling neck portion (110).

7. The air treatment device (100) according to claim 6,
**characterized in that**
the at least one first axial sealing surface (130) and/or the at least one first radial sealing surface (132) comprise at least one first sealing groove (134).

8. The air treatment device (100) according to claim 6 or 7,
**characterized in that**
the first sealing element (128) is formed by at least one circular sealing ring.

9. The air treatment device (100) according to one of claims 6 to 8,
**characterized in that**
the first sealing element (128), when the air treatment cartridge (108) is connected to the housing structure (102), is arranged such that the coupling neck portion (110) together with its air treatment cartridge (108) is pretensioned against the connecting neck portion (104) together with its housing structure (102).

10. The air treatment device (100) according to one of the preceding claims,
**characterized in that**
the housing structure (102) further has a connecting edge portion (106), and
the air treatment cartridge (108) further has a coupling edge portion (112) configured to connect or be connected to the connecting edge portion (106) of the housing structure (102), and
the air treatment device (100) further comprises at least one second sealing element (136), especially elastic and isotropic sealing element, being arranged, when the air treatment cartridge (108) is connected to the housing structure (102), between the connecting edge portion (106) and the coupling edge portion (112), wherein, with regard to the central axis (cAx), at least one second axial sealing surface (138) and at least one second radial sealing surface (140) for contacting the sealing element (136) in the connected state are formed by the connecting edge portion (106) and/or the coupling edge portion (112).

11. The air treatment device (100) according to claim 10,
**characterized in that**
the at least one second axial sealing surface (138) and/or the at least one second radial sealing surface (140) comprise at least one second sealing groove (142).

12. The air treatment device (100) according to claim 10 or 11,
**characterized in that**
the second sealing element (136) is formed by at least one circular sealing ring.

13. . The air treatment device (100) according to one of claims 10 to 12,
**characterized in that**
the second sealing element (136), when the air treatment cartridge (108) is connected to the housing structure (102), is arranged such that the coupling edge portion (112) together with its air treatment cartridge (108) is pretensioned against the connecting edge portion (106) together with its housing structure (102).

14. The air treatment device (100) according to one of the preceding claims,
**characterized in that**
the threaded hole (116) of the connecting edge portion (106) extends into an internal space (146) being pressurized, when the air treatment device (100) is operated, wherein, optionally, the threaded hole (116) is configured to form an airtight sealing together with the securing screw (118), when the connecting edge portion (106) and the coupling edge portion (112) are secured to each other by the securing screw (118) of the bayonet fixing means (114).

## Patentansprüche

1. Luftaufbereitungsvorrichtung (100) für ein Fahrzeug, insbesondere Nutzfahrzeug, wobei die Luftaufbereitungsvorrichtung (100) Folgendes umfasst:
eine Gehäusestruktur (102), die einen Verbindungshalsabschnitt (104) aufweist,
eine Luftaufbereitungskartusche (108), die so konstruiert ist, dass sie im Wesentlichen axialsymmetrisch relativ zu einer Mittelachse (cAx) ist und mit der Gehäusestruktur (102) verbunden ist oder mit dieser verbunden werden kann,
wobei die Luftaufbereitungskartusche (108) einen Kupplungshalsabschnitt (110) aufweist, der so konfiguriert ist, dass er mit dem Verbindungshalsabschnitt (104) der Gehäusestruktur (102) verbunden werden kann,
wobei, wenn die Luftaufbereitungskartusche (108) mit der Gehäusestruktur (102) verbunden ist, der Kupplungshalsabschnitt (110) und der Verbindungshalsabschnitt (104) exzentrisch relativ zur Mittelachse (cAx) angeordnet sind,
wobei die Gehäusestruktur (102) weiter einen Verbindungsrandabschnitt (106) aufweist und die Luftaufbereitungskartusche (108) weiter einen Kupplungsrandabschnitt (112) aufweist, der so konfiguriert ist, dass er über ein Bajonettbefestigungsmittel (114) mit dem Verbindungsrandabschnitt (106) der Gehäusestruktur (102) verbindet oder damit verbunden werden kann,
**dadurch gekennzeichnet, dass**
der Verbindungsrandabschnitt (106) mit einem Gewindeloch (116) zum Aufnehmen einer Sicherungsschraube (118) des Bajonettbefestigungsmittels (114) bereitgestellt ist, wobei das Gewindeloch (116) ein individuelles Schraubgewindeprofil (120) aufweist, das sich von einem standardisierten Schraubgewindeprofil unterscheidet,
wobei, wenn die Luftaufbereitungskartusche (108) mit der Gehäusestruktur (102) verbunden ist, der Verbindungsrandabschnitt (106) und der Kupplungsrandabschnitt (112) mit der Sicherungsschraube (118) des Bajonettbefestigungsmittels (114) gesichert werden können.

2. Luftaufbereitungsvorrichtung (100) nach Anspruch 1,
**dadurch gekennzeichnet, dass**
das Schraubgewindeprofil (120) im Verhältnis zu einem standardisierten Schraubgewindeprofil einen unterschiedlichen Gewindequerschnitt aufweist, wobei das standardisierte Schraubgewinde optional vom metrischen ISO-Typ oder vom Sägezahntyp ist.

3. Luftaufbereitungsvorrichtung (100) nach einem der vorstehenden Ansprüche,
**dadurch gekennzeichnet, dass**
die Luftaufbereitungskartusche (108) weiter einen oder mehrere Vorsprünge und/oder eine oder mehrere Aussparungen (122) umfasst, die zwischen dem Kupplungshalsabschnitt (110) beziehungsweise einem Kupplungsrandabschnitt (112) der Luftaufbereitungskartusche (108) angeordnet sind, und die Gehäusestruktur (102) weiter eine oder mehrere Aussparungen und/oder einen oder mehrere Vorsprünge (124) in entsprechender Weise in Bezug auf den einen oder die mehreren Vorsprünge und/oder die eine oder mehreren Aussparungen (122) der Luftaufbereitungskartusche (108) umfasst und zwischen dem Anschlusshalsabschnitt (104) beziehungsweise einem Verbindungsrandabschnitt (106) der Gehäusestruktur (102) angeordnet ist,
wobei, wenn die Luftaufbereitungskartusche (108) mit der Gehäusestruktur (102) verbunden ist, der eine oder die mehreren Vorsprünge (124) und/oder die eine oder mehreren Aussparungen (122) der Luftaufbereitungskartusche (108) und der Gehäusestruktur (102) in jeweils entsprechender Weise miteinander eingreifen.

4. Luftaufbereitungsvorrichtung (100) nach Anspruch 3,
**dadurch gekennzeichnet, dass**
die Vorsprünge (124) und/oder die Aussparungen (122) der Luftaufbereitungskartusche (108) und der Gehäusestruktur (102) gleichmäßig beabstandet oder in unterschiedlichen radialen Abständen in Bezug auf die Mittelachse (cAx) angeordnet sind.

5. Luftaufbereitungsvorrichtung (100) nach Anspruch 3 oder 4,
**dadurch gekennzeichnet, dass**
die Vorsprünge (124) der Luftaufbereitungskartusche (108) und/oder der Gehäusestruktur (102) jeweils schräge äußere Führungsflächen (126a) umfassen und die Aussparungen (122) der Luftaufbereitungskartusche (108) und/oder der Gehäusestruktur (102) jeweils schräge äußere Führungsflächen (126b) aufweisen, die in korrespondierender Weise in Bezug auf die jeweiligen zugeordneten Vorsprüngen (124) konfiguriert sind.

6. Luftaufbereitungsvorrichtung (100) nach einem der vorstehenden Ansprüche,
**dadurch gekennzeichnet, dass**
die Luftaufbereitungsvorrichtung (100) weiter mindestens ein erstes Dichtelement (128), insbesondere elastisches und isotropes Dichtelement, aufweist, das, wenn die Luftaufbereitungskartusche (108) mit der Gehäusestruktur (102) verbunden ist, zwischen dem Verbindungshalsabschnitt (104) und dem Kupplungshalsabschnitt (110) angeordnet ist, wobei, im Hinblick auf die Mittelachse (cAx), mindestens eine erste axiale Dichtfläche (130) und mindestens eine erste radiale Dichtfläche (132) zum Kontaktieren des Dichtelements (128) im verbundenen Zustand durch den Verbindungshalsabschnitt (104) und/oder den Kupplungshalsabschnitt (110) gebildet werden.

7. Luftaufbereitungsvorrichtung (100) nach Anspruch 6,
**dadurch gekennzeichnet, dass**
die mindestens eine erste axiale Dichtfläche (130) und/oder die mindestens eine erste radiale Dichtfläche (132) mindestens eine erste Dichtnut (134) umfasst.

8. Luftaufbereitungsvorrichtung (100) nach Anspruch 6 oder 7,
**dadurch gekennzeichnet, dass**
das erste Dichtelement (128) durch mindestens einen umlaufenden Dichtring gebildet ist.

9. Luftaufbereitungsvorrichtung (100) nach einem der Ansprüche 6 bis 8,
**dadurch gekennzeichnet, dass**
das erste Dichtelement (128), wenn die Luftaufbereitungskartusche (108) mit der Gehäusestruktur (102) verbunden ist, so angeordnet ist, dass der Kupplungshalsabschnitt (110) mitsamt seiner Luftaufbereitungskartusche (108) gegen den Verbindungshalsabschnitt (104) mitsamt seiner Gehäusestruktur (102) vorgespannt ist.

10. Luftaufbereitungsvorrichtung (100) nach einem der vorstehenden Ansprüche,
**dadurch gekennzeichnet, dass**
die Gehäusestruktur (102) weiter einen Verbindungsrandabschnitt (106) aufweist, und
die Luftaufbereitungskartusche (108) weiter einen Kupplungsrandabschnitt (112) aufweist, der so konfiguriert ist, dass er sich mit dem Verbindungsrandabschnitt (106) der Gehäusestruktur (102) verbindet oder damit verbunden werden kann, und
die Luftaufbereitungsvorrichtung (100) weiter mindestens ein zweites Dichtelement (136), insbesondere elastisches und isotropes Dichtelement, aufweist, das, wenn die Luftaufbereitungskartusche (108) mit der Gehäusestruktur (102) verbunden ist, zwischen dem Verbindungsrandabschnitt (106) und dem Kupplungsrandabschnitt (112) angeordnet ist, wobei, im Hinblick auf die Mittelachse (cAx), mindestens eine zweite axiale Dichtfläche (138) und mindestens eine zweite radiale Dichtfläche (140) zum Kontaktieren des Dichtelements (136) im verbundenen Zustand durch den Verbindungsrandabschnitt (106) und/oder den Kupplungsrandabschnitt (112) gebildet werden.

11. Luftaufbereitungsvorrichtung (100) nach Anspruch 10,
**dadurch gekennzeichnet, dass**
die mindestens eine zweite axiale Dichtfläche (138) und/oder die mindestens eine zweite radiale Dichtfläche (140) mindestens eine zweite Dichtnut (142) umfasst.

12. Luftaufbereitungsvorrichtung (100) nach Anspruch 10 oder 11,
**dadurch gekennzeichnet, dass**
das zweite Dichtelement (136) durch mindestens einen umlaufenden Dichtring gebildet ist.

13. Luftaufbereitungsvorrichtung (100) nach einem der Ansprüche 10 bis 12,
**dadurch gekennzeichnet, dass**
das zweite Dichtelement (136), wenn die Luftaufbereitungskartusche (108) mit der Gehäusestruktur (102) verbunden ist, so angeordnet ist, dass der Kupplungsrandabschnitt (112) mitsamt seiner Luftaufbereitungskartusche (108) gegen den Verbindungsrandabschnitt (106) mitsamt seiner Gehäusestruktur (102) vorgespannt ist.

14. Luftaufbereitungsvorrichtung (100) nach einem der vorstehenden Ansprüche,
**dadurch gekennzeichnet, dass**
sich das Gewindeloch (116) des Verbindungsrandabschnitts (106) in einen Innenraum (146) erstreckt, der unter Druck steht, wenn die Luftaufbereitungsvorrichtung (100) betrieben wird, wobei optional das Gewindeloch (116) so konfiguriert ist, dass es zusammen mit der Sicherungsschraube (118) eine luftdichte Abdichtung bildet, wenn der Verbindungsrandabschnitt (106) und der Kupplungsrandabschnitt (112) durch die Sicherungsschraube (118) des Bajonettbefestigungsmittels (114) aneinander gesichert sind.

## Revendications

1. Dispositif de traitement d'air (100) pour un véhicule, notamment véhicule utilitaire, le dispositif de traitement d'air (100) comprenant :
une structure de logement (102) présentant une partie de manche de liaison (104),
une cartouche de traitement d'air (108) étant construite pour être sensiblement symétrique axialement par rapport à un axe central (cAx) et étant reliée ou pouvant être reliée à la structure de logement (102),
dans lequel la cartouche de traitement d'air (108) présente une partie de manche de couplage (110) configurée pour relier ou être reliée à la partie de manche de liaison (104) de la structure de logement (102),
dans lequel, lorsque la cartouche de traitement d'air (108) est reliée à la structure de logement (102), la partie de manche de couplage (110) et la partie de manche de liaison (104) sont agencées pour être excentriques par rapport à l'axe central (cAx),
dans lequel la structure de logement (102) présente en outre une partie de bord de liaison (106), et la cartouche de traitement d'air (108) présente en outre une partie de bord de couplage (112) configurée pour relier ou être reliée à la partie de bord de liaison (106) de la structure de logement (102) par l'intermédiaire d'un moyen de fixation à baïonnette (114),
**caractérisé en ce que**
la partie de bord de liaison (106) est dotée d'un trou fileté (116) pour recevoir une vis de fixation (118) du moyen de fixation à baïonnette (114), le trou fileté (116) présentant un profil de filetage personnalisé (120) différent d'un profil de filetage normalisé,
dans lequel, lorsque la cartouche de traitement d'air (108) est reliée à la structure de logement (102), la partie de bord de liaison (106) et la partie de bord de couplage (112) peuvent être fixées avec la vis de fixation (118) du moyen de fixation à baïonnette (114).

2. Dispositif de traitement d'air (100) selon la revendication 1,
**caractérisé en ce que**
le profil de filetage (120) présente une zone de filetage transversal différente d'un profil de filetage normalisé, dans lequel, facultativement, le filetage normalisé est du type métrique ISO ou en dents de scie.

3. Dispositif de traitement d'air (100) selon l'une des revendications précédentes,
**caractérisé en ce que**
la cartouche de traitement d'air (108) comprend en outre une ou plusieurs saillies et/ou un ou plusieurs évidements (122) étant agencés entre la partie de manche de couplage (110) et une partie de bord de couplage (112) de la cartouche de traitement d'air (108), respectivement, et la structure de logement (102) comprend en outre un ou plusieurs évidements et/ou une ou plusieurs saillies (124) de manière correspondante par rapport aux une ou plusieurs saillies et/ou aux un ou plusieurs évidements (122) de la cartouche de traitement d'air (108), respectivement, et étant agencés entre la partie de manche de liaison (104) et une partie de bord de liaison (106) de la structure de logement (102), respectivement,
dans lequel, lorsque la cartouche de traitement d'air (108) est reliée à la structure de logement (102), les une ou plusieurs saillies (124) et/ou les un ou plusieurs évidements (122) de la cartouche de traitement d'air (108) et de la structure de logement (102) sont en prise les uns avec les autres de manière correspondante respective.

4. Dispositif de traitement d'air (100) selon la revendication 3,
**caractérisé en ce que**
les saillies (124) et/ou les évidements (122) de la cartouche de traitement d'air (108) et de la structure de logement (102) sont agencés à égale distance ou à des distances radiales différentes par rapport à l'axe central (cAx).

5. Dispositif de traitement d'air (100) selon la revendication 3 ou 4,
**caractérisé en ce que**
les saillies (124) de la cartouche de traitement d'air (108) et/ou de la structure de logement (102) comprennent respectivement des surfaces de guidage externes inclinées (126a) et les évidements (122) de la cartouche de traitement d'air (108) et/ou de la structure de logement (102) comprennent respectivement des surfaces de guidage externes inclinées (126b) configurées de manière correspondante par rapport aux saillies associées respectives (124).

6. Dispositif de traitement d'air (100) selon l'une des revendications précédentes,
**caractérisé en ce que**
le dispositif de traitement d'air (100) comprend en outre au moins un premier élément d'étanchéité (128), en particulier un élément d'étanchéité élastique et isotrope, étant agencé, lorsque la cartouche de traitement d'air (108) est reliée à la structure de logement (102), entre la partie de manche de liaison (104) et la partie de manche de couplage (110), dans lequel, par rapport à l'axe central (cAx), au moins une première surface d'étanchéité axiale (130) et au moins une première surface d'étanchéité radiale (132) destinées à entrer en contact avec l'élément d'étanchéité (128) à l'état relié sont formées par la partie de manche de liaison (104) et/ou la partie de manche de couplage (110).

7. Dispositif de traitement d'air (100) selon la revendication 6,
**caractérisé en ce que**
la au moins une première surface d'étanchéité axiale (130) et/ou la au moins une première surface d'étanchéité radiale (132) comprennent au moins une première rainure d'étanchéité (134).

8. Dispositif de traitement d'air (100) selon la revendication 6 ou 7,
**caractérisé en ce que**
le premier élément d'étanchéité (128) est formé par au moins une bague d'étanchéité circulaire.

9. Dispositif de traitement d'air (100) selon l'une des revendications 6 à 8,
**caractérisé en ce que**
le premier élément d'étanchéité (128), lorsque la cartouche de traitement d'air (108) est reliée à la structure de logement (102), est agencé de telle sorte que la partie de manche de couplage (110) avec sa cartouche de traitement d'air (108) soit précontrainte contre la partie de manche de liaison (104) avec sa structure de logement (102).

10. Dispositif de traitement d'air (100) selon l'une des revendications précédentes,
**caractérisé en ce que**
la structure de logement (102) présente en outre une partie de bord de liaison (106), et
la cartouche de traitement d'air (108) présente en outre une partie de bord de couplage (112) configurée pour relier ou être reliée à la partie de bord de liaison (106) de la structure de logement (102), et
le dispositif de traitement d'air (100) comprend en outre au moins un second élément d'étanchéité (136), en particulier un élément d'étanchéité élastique et isotrope, étant agencé, lorsque la cartouche de traitement d'air (108) est reliée à la structure de logement (102), entre la partie de bord de liaison (106) et la partie de bord de couplage (112), dans lequel, par rapport à l'axe central (cAx), au moins une seconde surface d'étanchéité axiale (138) et au moins une seconde surface d'étanchéité radiale (140) destinées à entrer en contact avec l'élément d'étanchéité (136) à l'état relié sont formées par la partie de bord de liaison (106) et/ou la partie de bord de couplage (112).

11. Dispositif de traitement d'air (100) selon la revendication 10,
**caractérisé en ce que**
la au moins une seconde surface d'étanchéité axiale (138) et/ou la au moins une seconde surface d'étanchéité radiale (140) comprennent au moins une seconde rainure d'étanchéité (142).

12. Dispositif de traitement d'air (100) selon la revendication 10 ou 11,
**caractérisé en ce que**
le second élément d'étanchéité (136) est formé par au moins une bague d'étanchéité circulaire.

13. Dispositif de traitement d'air (100) selon l'une des revendications 10 à 12,
**caractérisé en ce que**
le second élément d'étanchéité (136), lorsque la cartouche de traitement d'air (108) est reliée à la structure de logement (102), est agencé de telle sorte que la partie de bord de couplage (112) avec sa cartouche de traitement d'air (108) soit précontrainte contre la partie de bord de liaison (106) avec sa structure de logement (102).

14. Dispositif de traitement d'air (100) selon l'une des revendications précédentes,
**caractérisé en ce que**
le trou fileté (116) de la partie de bord de liaison (106) s'étend dans un espace interne (146) étant mis sous pression, lorsque le dispositif de traitement d'air (100) est actionné, dans lequel, facultativement, le trou fileté (116) est configuré pour former une fermeture hermétique avec la vis de fixation (118), lorsque la partie de bord de liaison (106) et la partie de bord de couplage (112) sont fixées l'une à l'autre par la vis de fixation (118) du moyen de fixation à baïonnette (114).
